# EUROPÄISCHE PATENTSCHRIFT

(11) **EP 2 558 768 B1**
(45) Veröffentlichungstag und Bekanntmachung des Hinweises auf die Patenterteilung: **06.05.2015**
(21) Anmeldenummer: 11715877.4
(22) Anmeldetag: 31.03.2011
(51) Int. Cl.: F16N 29/04

(54) **SCHMIERSYSTEM UND FAHRZEUG MIT EINEM SCHMIERSYSTEM**
LUBRICATION SYSTEM AND VEHICLE HAVING A LUBRICATION SYSTEM
SYSTÈME LUBRIFIANT ET VÉHICULE DOTÉ D'UN SYSTÈME LUBRIFIANT

(30) Priorität: 15.04.2010 DE 202010005100 U
(43) Veröffentlichungstag der Anmeldung: 20.02.2013
(73) Patentinhaber: SKF Lubrication Systems Germany GmbH, 69190 Walldorf (DE)
(72) Erfinder: GÜNTHER, Armin, 74921 Helmstadt-Bargen (DE); TRINKEL, Ralf, 67227 Frankenthal (DE); NAUDSZUS, Bernd, 47809 Krefeld (DE); GODOWSKI, Sebastian, 44534 Lünen (DE); KANNEGIEßER, Herbert, 40591 Düsseldorf (DE)
(74) Vertreter: Keil & Schaafhausen Patent- und Rechtsanwälte
(86) Internationale Anmeldenummer: PCT/EP2011/001619
(87) Internationale Veröffentlichungsnummer: WO 2011/141095

(56) Entgegenhaltungen:
- EP-A2- 0 159 580
- WO-A1-2007/087720
- WO-A2-2010/028387
- FR-A- 370 582
- US-A- 3 721 898
- US-B1- 6 933 438

## Beschreibung

Die Erfindung betrifft ein Schmiersystem zur Versorgung wenigstens einer Schmierstelle mit einem Schmierstoff mit wenigstens einer Fördereinrichtung und wenigstens einer zwischen dieser und einer Schmierstelle verlaufenden Leitung. Weiter betrifft die Erfindung ein Fahrzeug, insbesondere eine Baumaschine, mit einem derartigen Schmiersystem.

In Fahrzeugen, insbesondere im Bereich der Baumaschinen, wie Bagger oder dergleichen, aber auch bei stationären Anlagen werden Schmiersysteme eingesetzt, um häufig eine Vielzahl von Schmierstellen, bspw. Lager, ausreichend mit Schmierstoff zu versorgen. Eine auch in Fahrzeugen einsetzbare Zentralschmiereinrichtung ist aus der DE 34 15 076 C1 bekannt. Als Einrichtung zum Fördern von Schmierstoff werden dort eine Zentralschmierkolbenpumpe sowie mehrere Verteiler vorgeschlagen. Von diesen Verteilern aus, verlaufen Schmierstellenleitungen zu den einzelnen Schmierstellen, die mit einem Schmierstoff versorgt werden sollen.

Ein Schmiersystem der oben genannten Art ist aus der EP 0 159 580 A2 bekannt. Weiter ist aus der US 3,721,898 eine Leitung mit einem elektrischen Leiter bekannt, der bei einer Unterbrechung ein Signal erzeugt und das Abreißen einer Leitung detektiert.

Bei Baumaschinen kommt es häufig vor, dass die Schmierleitungen, d. h. die von einer Fördereinrichtung zu einer Schmierstelle verlaufende Leitung, abreißt. Dies tritt besonders häufig im Schaufelbereich oder im Bereich anderer Werkzeuge von Baumaschinen auf, die besonderer mechanischer Belastung ausgesetzt sind. In solchen Fällen werden die betroffenen Schmierstellen nicht mehr geschmiert, was bspw. zu Lagerschäden führt, die erhebliche Kosten verursachen,

Aufgabe der vorliegenden Erfindung ist es demgegenüber ein Schmiersystem der eingangsgenannten Art, welches insbesondere für den Einsatz in Fahrzeugen geeignet ist, bereitzustellen, welches den Abriss einer solchen Leitung einfach und wirksam überwachen kann.

Diese Aufgabe wird erfindungsgemäß im Wesentlichen mit einem Schmiersystem mit den Merkmalen des Anspruchs 1 gelöst. Wenn an der Fördereinrichtung und der Schmierstelle jeweils ein elektrischer Anschluss vorgesehen wird und der Leitung, die zwischen der Fördereinrichtung und der Schmierstelle verläuft, ein zwischen diesen beiden Anschlüssen verlaufender elektrischer Leiter zugeordnet ist, kann eine Überwachungseinrichtung der Leitung dadurch realisiert werden, dass diese bei Unterbrechung des elektrischen Leiters zwischen den beiden Anschlüssen ein Signal erzeugt. Der Erfindung liegt damit der Gedanke zugrunde, dass das Abreißen einer Leitung durch die Unterbrechung eines parallel zu dieser Leitung verlaufenden elektrischen Leiters detektierbar ist. Das Abreißen einer Schmierleitung kann auf diese Weise sehr einfach und wirksam überwacht und angezeigt werden, so dass ggf. eine rasche Reparatur erfolgen kann, bevor ein zeit- und kostenintensiver Schaden bspw. an einem Lager oder dergleichen Schmierstelle, auftritt.

Wenn aus baulichen oder anderen Gründen ein elektrischer Anschluss nicht an der Fördereinrichtung und/oder der Schmierstelle selbst vorgesehen ist, kann der elektrische Leiter bis zu einem an einer beliebigen anderen Stelle angeordneten elektrischen Anschluss geführt und an oder in unmittelbarer Nähe zu der Fördereinrichtung bzw. der Schmierstelle derart befestigt werden, dass bei einem Abreißen der Leitung der parallel zu dieser verlaufende elektrische Leiter zwischen der Fördereinrichtung und der Schmierstelle durchtrennt wird. Erfindungsgemäß kann somit bspw. ein Kabel parallel zu einer zu überwachenden Leitung von einer Fördereinrichtung bis zu einer Schmierstelle verlegt werden, dort befestigt und z.B. zu einem nahe der Fördereinrichtung gelegenen Masseanschluss zurückgeführt werden.

Der elektrische Leiter ist erfindungsgemäß dadurch realisieren, dass die Leitung selbst als ein elektrischer Leiter ausgebildet ist oder der elektrische Leiter in die Leitung integriert ist. So kann die Schmierleitung bspw. als ein Stahlrohr oder dergleichen ausgebildet sein. Alternativ ist es auch möglich, einen Schlauch bspw. mit einer Stahlarmierung oder einer Armierung aus einem anderen geeigneten elektrisch leitfähigen Material auszubilden. Auf diese Wiese ist sichergestellt, dass die Überwachungseinrichtung nur bei tatsächlichem Abriss der Leitung selbst ein entsprechendes Signal erzeugt.

Eine besonders einfache Methode, die auch zur Nachrüstung bestehender Schmiersysteme geeignet ist, liegt darin, dass der elektrische Leiter parallel zu der Leitung verläuft. So kann bspw. ein Kabel oder dergleichen entlang einer Schmierleitung verlegt werden, die dann selbst nicht elektrisch leitend sein muss.

Um den baulichen Aufwand möglichst gering zu halten, wird es bevorzugt, wenn der elektrische Anschluss an der Schmierstelle ein Masseanschluss ist und der elektrische Anschluss an der Fördereinrichtung eine Massetrennstelle ist, die von der Fördereinrichtung elektrisch isoliert ist. Bei der Verwendung des erfindungsgemäßen Schmiersystems ein einem Fahrzeug oder einer Baumaschine kann der elektrische Anschluss an der Schmierstelle bspw. mit der Karosserie und/oder Chassis bzw. einem hiermit in elektrischer Verbindung stehenden Bauteil, bspw. einem Lager, einer Baggerschaufel oder dergleichen Werkezeug, verbunden werden. Zwischen den beiden Anschlüssen soll der elektrische Leiter keinen elektrischen Kontakt mit der Masse haben. An der der Fördereinrichtung zugeordneten Massetrennstelle wird der elektrische Leiter und somit ein Masseanschluss mit den Eingängen eines Auswertegerätes (Überwachungseinrichtung) elektrisch verbunden.

Es hat sich als besonders einfach herausgestellt, wenn die Überwachungseinrichtung Mittel zur Erzeugung eines optischen Signals aufweist. So kann die Überwachungseinrichtung bspw. wenigstens eine Leuchtdiode (LED) aufweisen, die durch Aufleuchten anzeigt, ob der elektrische Leiter und damit die Schmierstoffleitung abgerissen ist oder nicht. Alternativ ist es auch möglich, durch einen Farbwechsel des optischen Signals das Abreißen einer Schmierleitung anzuzeigen. Dies kann über zweifarbige Leuchtdioden oder mehrere Leuchtdioden oder dergleichen erfolgen. Alternativ oder zusätzlich hierzu ist es auch möglich, ein akustisches oder anderes geeignetes Signal auszugeben, welches eine Bedienperson auf das Abreißen einer Leitung aufmerksam machen kann.

Der Aufbau der Überwachungseinrichtung kann besonders einfach gehalten werden, wenn diese wenigstens ein Relais aufweist, so kann das Relais bspw. mit dem Pluspol einer Batterie oder dergleichen Stromquelle verbunden sein, während der zweite Anschluss mit dem elektrischen Leiter (Masseanschluss), der der zu überwachenden Leitung zugeordnet ist, verbunden wird. Solange das Relais mit dem Masseanschluss verbunden ist, kann dieses bspw. eine grüne LED einschalten und bei der Unterbrechung des Masseanschlusses diese LED ausschalten und/oder eine rote LED einschalten. Alternativ ist es auch möglich, dass eine LED nur dann eingeschaltet wird, wenn der elektrische Leiter von dem Masseanschluss getrennt wird, d.h. wenn die zu überwachende Leitung abgerissen ist.

In Weiterbildung des Erfindungsgedankens kann die Überwachungseinrichtung auch wenigstens eine speicherprogrammierbare Steuerung (SPS) aufweisen bzw. mit einer solchen verbunden sein.

Unter einer Fördereinrichtung im Sinne des erfindungsgemäßen Schmiersystems kann eine beliebige Schmierstoffpumpe und/oder wenigstens ein Schmierstoffverteiler verstanden werden. Das erfindungsgemäße Schmiersystem ist auch mit besonders einfachen Mitteln dazu geeignet, mehrere Leitungen, die bspw. von einem Schmierstoffverteiler zu einzelnen Schmierstellen führen, gleichzeitig auf Abriss zu überwachen. Hierzu wird jeder der zu überwachenden Leitungen ein entsprechender elektrischer Leiter zugeordnet. Die Überwachungseinrichtung kann dabei entweder die Leitungen einzeln überwachen oder diese Leitung gemeinsam überwachen, so dass ein Signal ausgegeben wird, wenn eine beliebige der Leitungen abgerissen ist. Es wird jedoch bevorzugt, wenn bei mehreren überwachten Leitungen für jede dieser Leitungen ein individuelles Signal ausgegeben wird, welches Rückschlüsse darauf zulässt, ob eine bestimmte Leitung unterbrochen ist oder nicht.

Das erfindungsgemäße Schmiersystem ist unter Bezugnahme auf die Überwachung einer Schmierstoffleitung mittels eines elektrischen Leiters beispielhaft beschrieben. Grundsätzlich ist es jedoch auch erfindungsgemäß möglich, eine Leitung über einen anderen Leiter, bspw. eine Lichtwellenleiter, daraufhin zu überwachen, ob die Leitung abgerissen ist oder nicht.

Ein erfindungsgemäßes Fahrzeug weist wenigstens ein Schmiersystem der oben genannten Art auf. Hierbei wird es bevorzugt, wenn der elektrische Anschluss an der wenigstens einen Schmierstelle mit der Karosserie und/oder dem Chassis bzw. einem hiermit in elektrischem Kontakt stehenden Bauteil verbunden ist. Grundsätzlich ist es dabei möglich, sämtliche Schmierleitungen zu überwachen. Es wird jedoch bevorzugt, wenn zumindest die Schmierstellen, die dem Antrieb und/oder der Lagerung einer Schaufel oder dergleichen Werkzeug zugeordnet sind, durch die erfindungsgemäße Überwachungseinrichtung daraufhin überwacht werden, ob die Leitung abgerissen ist oder nicht.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich den Gegenstand der Erfindung unabhängig von Ihrer Zusammenfassung in den Ansprüchen oder deren Rückbezügen.

Es zeigen schematisch:
- Fig.1: eine Prinzipskizze eines erfindungsgemäßen Schmiersystems und
- Fig.2: den Stromlaufplan der Überwachungseinrichtung des Schmiersystems nach Fig. 1.

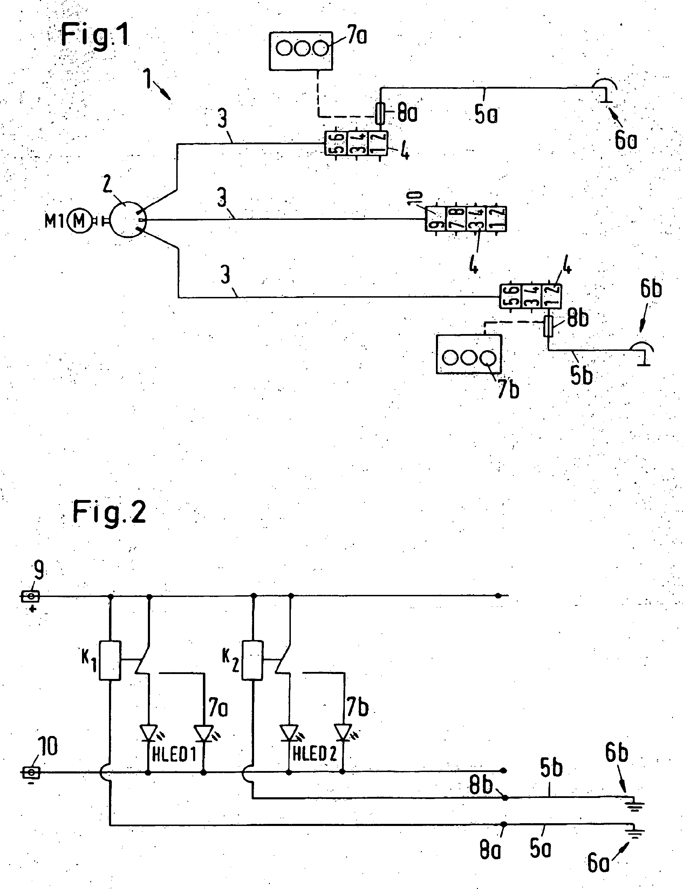

Das in Fig. 1 dargestellte Schmiersystem 1 weist eine Puppe 2 auf, mit welcher Schmierstoff aus einem nicht dargestellten Schmierstoffreservoir über Leitungen 3 zu Schmierstoffverteilern 4 gefördert wird. Von diesem Schmierverteilern 4 aus führen (Schmierstoff-)Leitungen 5a und 5b zu Schmierstellen 6a, 6b, welche bspw. zum Abschmieren von Lagern oder dergleichen dienen. In der dargestellten Ausführungsform sind nur bei zwei Verteilern 4 jeweils ein Schmierstoffauslass mit einer Leitung 5a bzw. 5b verbunden. Grundsätzlich können jedoch auch bei mehreren der Schmierstoffverteiler 4 zu Schmierstellen führenden Leitungen angeschlossen werden. Die Pumpe 2 sowie die Schmierstoffverteiler 4 bilden dabei jeweils eine Fördereinrichtung zur Weiterleitung von Schmierstoff an eine Schmierstelle. Die Leitungen 3, 5a und 5b bilden jeweils (Schmierstoff-)Leitungen, die zwischen einer Fördereinrichtung und einer Schmierstelle 6a, 6b angeordnet sind.

Weiter ist in Fig. 1 eine Überwachungseinrichtung 7a, 7b dargestellt, welche die beiden Leitungen 5a, 5b überwacht. Hierzu sind die beiden Leitungen 5a, 5b jeweils aus einem elektrisch leitenden Material gefertigt, bzw. ein solches ist bspw. als Armierung in die Leitungen 5a, 5b integriert. Im Bereich der beiden Schmierstellen 6a, 6b sind die elektrischen Leiter mit einem Masseanschluss, bspw. einem mit dem Chassis verbundenen Bauteil elektrisch verbunden. Die Leitungen 5a, 5b sind an entsprechenden Schmierstoffauslässen der Verteiler 4 angeschlossen, weisen jedoch eine Massetrennstelle 8a, 8b auf, so dass sie von der Fördereinrichtung (Schmierstoffverteiler 4) jeweils elektrisch isoliert sind. Von diesen Massetrennstellen 8a, 8b aus besteht eine elektrische Verbindung zu der Überwachungseinrichtung 7a, 7b von welcher in Fig. 1 lediglich eine Einrichtung zum Ausgeben eines optischen Signals dargestellt ist.

Der Aufbau bzw. Stromlaufplan der Überwachungseinrichtung 7a, 7b ist in Fig. 2 näher dargestellt. Der Pluspol 9 einer Batterie oder dergleichen Stromquelle ist mit zwei Relais K₁ und K₂ verbunden. Der andere Eingang der beiden Relais ist wie in Fig. 1 dargestellt, über die Leitungen 5a, 5b mit den Masseanschlüssen 6a bzw. 6b der Schmierstellen verbunden. Mittels der beiden Relais K₁ und K₂ lassen sich für jede der Leitungen 5a, 5b rote und grüne LED's 7a, 7b ein- oder ausschalten, welche ebenfalls mit dem Pluspol 9 der Batterie sowie deren Minuspol 10 verbunden sind.

Wenn nun eine der Leitungen 5a oder 5b von der Schmierstelle 6a, 6b abreißt, wird auch der Masseanschluss des jeweiligen Relais unterbrochen, so dass dieses bspw. von einem grünen LED auf ein rotes LED umschaltet. Auf diese Weise ist mit besonders einfachen Mitteln eine Überwachung der Schmierstoffleitungen 5a, 5b möglich.

### Bezugszeichenliste:

- 1: Schmiersystem
- 2: Pumpe
- 3: Leitung
- 4: Schmierstoffverteiler
- 5a, 5b: Leitung
- 6a, 6b: Schmierstelle (Masseanschluss)
- 7a, 7b: LED der Überwachungseinrichtung
- 8a, 8b: Massetrennstelle
- 9: Pluspol
- 10: Minuspol

- K₁ und K₂: Relais

## Patentansprüche

1. Schmiersystem zur Versorgung wenigstens einer Schmierstelle mit einem Schmierstoff mit wenigstens einer Fördereinrichtung (2, 4) und wenigstens einer zwischen dieser und einer Schmierstelle (6a, 6b) verlaufenden Leitung (3, 5a, 5b), **dadurch gekennzeichnet, dass** an der Fördereinrichtung (2, 4) und der Schmierstelle (6a, 6b) jeweils ein elektrischer Anschluss vorgesehen sind, dass der Leitung (5a, 5b) ein zwischen den beiden Anschlüssen verlaufender elektrischer Leiter zugeordnet ist, und dass eine Überwachungseinrichtung (7a, 7b, K₁, K₂) der Leitung (5a, 5b) derart zugeordnet ist, dass diese bei Unterbrechung des elektrischen Leiters ein Signal erzeugt, wobei
die Leitung (5a, 5b) selbst als der elektrische Leiter ausgebildet ist oder der elektrische Leiter in die Leitung (5a, 5b) integriert ist.

2. Schmiersystem nach Anspruch 1, **dadurch gekennzeichnet, dass** der elektrische Leiter parallel zu der Leitung (5a, 5b) verläuft.

3. Schmiersystem nach einem der vorhergehenden Ansprüche, **dadurch gekennzeichnet, dass** der elektrische Anschluss an der Schmierstelle (6a, 6b) ein Masseanschluss ist und der elektrische Anschluss (8a, 8b) an der Fördereinrichtung (4) eine Massetrennstelle ist, die von der Fördereinrichtung (4) elektrisch isoliert ist.

4. Schmiersystem nach einem der vorhergehenden Ansprüche, **dadurch gekennzeichnet, dass** die Überwachungseinrichtung (7a, 7b, K₁, K₂) Mittel zur Erzeugung eines optischen Signals, insbesondere wenigstens eine Leuchtdiode (7a, 7b), aufweist.

5. Schmiersystem nach einem der vorhergehenden Ansprüche, **dadurch gekennzeichnet, dass** die Überwachungseinrichtung (7a, 7b, K₁, K₂) wenigstens ein Relais (K₁, K₂) aufweist.

6. Schmiersystem nach einem der vorhergehenden Ansprüche, **dadurch gekennzeichnet, dass** die Überwachungseinrichtung (7a, 7b, K₁, K₂) wenigstens eine speicherprogrammierbare Steuerung aufweist.

7. Schmiersystem nach einem der vorhergehenden Ansprüche, **dadurch gekennzeichnet, dass** die Fördereinrichtung eine Pumpe (2) oder ein Schmierstoffverteiler (4) ist.

8. Fahrzeug, insbesondere Baumaschine, mit einem Schmiersystem nach einem der vorhergehenden Ansprüche, **dadurch gekennzeichnet, dass** der elektrische Anschluss an der Schmierstelle (6a, 6b) mit der Karosserie und/oder dem Chassis bzw. einem hiermit in elektrischem Kontakt stehenden Bauteil verbunden ist.

9. Fahrzeug, insbesondere Baumaschine, nach Anspruch 8 mit einer Schaufel oder dgl. Werkzeug, **dadurch gekennzeichnet, dass** die Schmierstelle (6a, 6b) dem Antrieb und/oder der Lagerung der Schaufel oder dgl. Werkzeug zugeordnet ist.

## Claims

1. A lubrication system for supplying at least one lubrication point with a lubricant with at least one conveying device (2, 4) and at least one line (3, 5a, 5b) running between said conveying device and a lubrication point (6a, 6b), **characterised in that** an electrical connection is provided in each case on the conveying device (2, 4) and the lubrication point (6a, 6b), that an electrical conductor running between the two connections is assigned to the line (5a, 5b), and that a monitoring device (7a, 7b, K₁, K₂) is assigned to the line (5a, 5b) in such a way that said monitoring device generates a signal when the electrical conductor is interrupted, wherein
the line (5a, 5b) itself is constituted as the electrical conductor or the electrical conductor is integrated into the line (5a, 5b).

2. The lubrication system according to claim 1, **characterised in that** the electrical conductor runs parallel to the line (5a, 5b).

3. The lubrication system according to any one of the preceding claims, **characterised in that** the electrical connection to the lubrication point (6a, 6b) is a connection to earth and the electrical connection (8a, 8b) to the conveying device (4) is an earth isolating point which is electrically insulated from the conveying device (4).

4. The lubrication system according to any one of the preceding claims, **characterised in that** the monitoring device (7a, 7b, K₁, K₂) comprises means for generating an optical signal, in particular at least one light emitting diode (7a, 7b).

5. The lubrication system according to any one of the preceding claims, **characterised in that** the monitoring device (7a, 7b, K₁, K₂) comprises at least one relay (K₁, K₂).

6. The lubrication system according to any one of the preceding claims, **characterised in that** the monitoring device (7a, 7b, K₁, K₂) comprises at least one stored-program controller.

7. The lubrication system according to any one of the preceding claims, **characterised in that** the conveying device is a pump (2) or a lubricant distributor (4).

8. A vehicle, in particular a construction machine, with a lubrication system according to any one of the preceding claims, **characterised in that** the electrical connection to the lubrication point (6a, 6b) is connected to the bodywork and/or the chassis or a component in electrical contact therewith.

9. The vehicle, in particular a construction machine, according to claim 8 with a shovel or similar tool, **characterised in that** the lubrication point (6a, 6b) is assigned to the drive and/or to the bearing of the shovel or similar tool.

## Revendications

1. Système lubrifiant pour alimenter au moins un point de lubrification avec un lubrifiant avec au moins un système de transport (2, 4) et au moins un conduit (3, 5a, 5b) passant entre celui-ci et un point de lubrification (6a, 6b), **caractérisé en ce qu'**une connexion électrique est respectivement prévue sur le système de transport (2, 4) et le point de lubrification (6a, 6b) et **en ce qu'**au conduit (5a, 5b) est affecté un conducteur électrique passant entre les deux connexions et **en ce qu'**un dispositif de surveillance (7a, 7b, K₁, K₂) est affecté au conduit (5a, 5b) de telle sorte que celui-ci produit un signal en cas d'interruption du conducteur électrique,
le conduit (5a, 5b) étant lui-même constitué comme le conducteur électrique ou le, conducteur électrique étant intégré dans le conduit (5a, 5b).

2. Système lubrifiant selon la revendication 1, **caractérisé en ce que** le conducteur électrique passe parallèlement au conduit (5a, 5b).

3. Système lubrifiant selon l'une quelconque des revendications précédentes, **caractérisé en ce que** la connexion électrique au point de lubrification (6a, 6b) est une mise à la masse et la connexion électrique (8a, 8b) sur le système de transport (4) est un point de séparation de masse qui est électriquement isolé du système de transport (4).

4. Système lubrifiant selon l'une quelconque des revendications précédentes, **caractérisé en ce que** le dispositif de surveillance (7a, 7b, K₁, K₂) comporte un moyen pour produire un signal optique, en particulier au moins une diode électroluminescente (7a, 7b).

5. Système lubrifiant selon l'une quelconque des revendications précédentes, **caractérisé en ce que** le dispositif de surveillance (7a, 7b, K₁, K₂) comporte au moins un relais (K₁, K₂).

6. Système lubrifiant selon l'une quelconque des revendications précédentes, **caractérisé en ce que** le dispositif de surveillance (7a, 7b, K₁, K₂) comporte au moins un automate programmable.

7. Système lubrifiant selon l'une quelconque des revendications précédentes, **caractérisé en ce que** le système de transport est une pompe (2) ou un diffuseur de lubrifiant (4).

8. Véhicule, en particulier engin de génie civil, doté d'un système lubrifiant selon l'une quelconque des revendications précédentes, **caractérisé en ce que** la connexion électrique au point de lubrification (6a, 6b) est raccordée à la carrosserie et/ou au châssis ou à un élément en contact électrique avec ceux-ci.

9. Véhicule, en particulier engin de génie civil, doté d'un système lubrifiant selon la revendication 8 avec godet ou outil analogue, **caractérisé en ce que** le point de lubrification (6a, 6b) est affecté à la commande et/ou au logement de support du godet ou outil analogue.
